# EUROPÄISCHE PATENTANMELDUNG

(11) **EP 0 536 716 A1**
(43) Veröffentlichungstag der Anmeldung: **14.04.1993**
(21) Anmeldenummer: 92117114.6
(22) Anmeldetag: 07.10.1992
(51) Int. Cl.: C05F 7/00, C05F 17/00, A01G 1/00

(54) **Verfahren zur Rekultivierung stillgelegter landwirtschaflicher und/oder industriell genutzter Flächen durch Klärschlamm**

(30) Priorität: 07.10.1991 DE 4133211
(71) Anmelder: ALLIED COLLOIDS GmbH, D-22419 Hamburg (DE)
(72) Erfinder: Heydrich, Klaus, W-6384 Schmitten 6 (DE)
(74) Vertreter: Vogeser, Werner, Dipl.-Ing.

(57) **Zusammenfassung**

Ein Verfahren zur Rekultivierung stillgelegter landwirtschaftlicher und/oder industriell genutzter Flächen durch Klärschlamm wird beschrieben, bei dem ein nach Durchlauf verschiedener Verfahrensstufen erhaltenes humusähnliches Substrat auf Böschungen und/oder Erdwällen, auf Deponien oder auf abgeholzte Flächen ausgetragen wird. Zu diesem Zweck können dem Substrat verschiedene chemische Verbindungen zugesetzt werden. Gemäß einer Ausführungsform der Erfindung findet das eingesetzte Substrat als Blumenerde Verwendung.

## Beschreibung

Die Erfindung betrifft ein Verfahren zur Rekultivierung stillgelegter landwirtschaftlicher und/oder industriell genutzter Flächen durch Klärschlamm gemäß dem Oberbegriff des Patentanspruchs 1 sowie eine spezifische Verwendung des in dem Verfahren eingesetzten humusähnlichen Substrates.

Nachdem die Verwendung von Klärschlamm z.B. als Düngemittel wegen der Belastung mit zum Teil hochgiftigen Schadstoffen durch den Gesetzgeber mit erheblichen Auflagen verbunden ist, ist, wegen des erwachenden Umweltbewußtseins der Bevölkerung, die umweltschonende Beseitigung von Klärschlämmen ein wichtiges, heute und in der Zukunft zu lösendes Problem.

Klärschlämme entstehen durch die Aufbereitung kommunaler und/oder auch industrieller Abwässer, welche in den mechanischen, biologischen und chemischen Klärstufen einer Kläranlage mit einem hohen Wasseranteil und einem sehr hohen OTS-Anteil flüssig anfallen.

Aus der älteren Patentanmeldung P 41 11 314 der Anmelderin ist ein Verfahren zur biologischen Trocknung von Klärschlamm durch mechanische Entwässerung des Klärschlamms, aerobe mikrobielle Vorrotte und aerobe mikrobielle Nachrotte bekannt, wobei zur Trocknung des Klärschlammes ein gegebenenfalls vorbehandeltes Substrat aus Vorrotte und/oder Nachrotte als Additiv zugesetzt wird. Der Klärschlamm wird dabei in ein humusähnliches Substrat umgewandelt, das einen stark verringerten OTS-Gehalt aufweist.

Wegen der Belastung der Umwelt durch z.B. aus der chemischen Industrie stammende Abfälle, aber auch durch die mit hochgiftigen Stoffen belasteten Nutzflächen, die z.B. in den Gebieten der ehemaligen DDR sehr häufig anzutreffen sind, sowie aufgelassenen Deponien, sollen und müssen diese auf Grund der verschärften Umweltauflagen weitestgehend gegen eine Abgabe schädlicher Stoffe abgedichtet werden. Bekannt ist die Abdeckung von z.B. Deponien mittels Planen, Bentoniten, Folien oder Beton, wobei diese Abdeckungsverfahren den Nachteil haben, daß, wegen der arbeitenden Deponiekörper, zum einen die Planen reißen können, der Beton undicht wird oder einbricht und nicht mehr befahrbar ist bzw. komplizierte Sickerwassergräben und -turmsysteme sowie Deponiegasabfackelungsvorrichtungen vorgesehen werden müssen, die wegen des arbeitenden Deponiekörpers Schaden nehmen.

Ein großflächiges Abdecken von ehemals landwirtschaftlichen und/oder industriellen Nutzflächen nach Beseitigung der darauf stehenden Gebäude sowie die Rekultivierung dieser Flächen als billige und in großtechnischem Maßstab durchführbare Weise war bis jetzt jedoch noch nicht möglich.

Aufgabe der Erfindung ist es daher, ein Verfahren bereitzustellen, bei dem die in großen Mengen anfallenden Klärschlämme kommunalen sowie industriellen Ursprungs nach ihrer Weiterverarbeitung zur Rekultivierung stillgelegter Nutzflächen oder als Blumenerde nach entsprechender Behandlung Verwendung finden.

Erfindungsgemäß wird diese Aufgabe durch die im Patentanspruch 1 angegebenen Merkmale gelöst, indem ein nach mechanischer Entwässerung und Zusatz von Additiven, z.B. Enzymen, Bakterien oder Membraneffektoren, nach aerober mikrobieller Vorrotte und aerober Nachrotte erhaltenes, humusähnliches Substrat zum Landschaftsbau auf Böschungen und/oder Erdwällen, auf Deponien als Abdeckungen oder auf abgeholzte Flächen zur Wiederaufforstung aufgetragen wird. Auf Grund des durch biologische Trocknung erhaltenen humusähnlichen Substrates, wobei dieses biologische Trocknen in Gegenwart von Additiven, wie Verdickungsmitteln, Absorptionsmitteln, Enzymen, Bakterien, Lösungsvermittlern oder Membraneffektoren nach den im Stand der Technik bekannten Verfahrensweisen erfolgt, wird durch den viel geringeren Gehalt an schädlichen Bestandteilen ein die Umwelt gering bis wenig belastendes, erdähnliches Substrat erhalten, das ohne weiteren Zusatz von z.B. Brandkalk auch als Blumentopferde eingesetzt werden kann.

Damit das aufgetragene humusähnliche Substrat vorteilhaft auch wieder für Wiederaufforstungszwecke nicht nur von niederen Planzen und Gräsern, sondern auch von Bäumen eingesetzt werden kann, hat es sich als vorteilhaft erwiesen, dem erhaltenen Substrat vor dem Austrag auf die zu rekultivierende Fläche anorganische und/ oder organische Verbindungen zuzusetzen. Damit können für das Pflanzenwachstum notwendige Mineralstoffe, zusätzlich zu dem in dem humusähnlichen Substrat enthaltenem Phosphat, Stickstoff und der anderen organischen Biomasse, zugeführt werden, so daß auch an geringere Nährstoffbedürfnisse angepaßte, schnellwachsende Pflanzen wie Espen, Weiden und Pappeln zur Grundlage der Rekultivierung und Wiederaufforstung gemacht werden können, wobei diese Flächen der Naherholung dienen können oder, nach erneuter Abholzung der Bäume, als Rohstoffe Verwendung finden.

Als für das Pflanzenwachstum geeignete anorganische Verbindungen haben sich die Alkali- und/oder Erdalkali-Metallsalze sowie typische Spurenelemente gezeigt. Von diesen seien im wesentlichen die Calzium- und Magnesium-Verbindungen sowie Kalk und Kali genannt und die typischen Spurenelemente wie Bor, Aluminium, Cobalt, Mangan, Molybdän, Kupfer, Zink oder Schwefel, die dem humusähnlichen Substrat vor dem Austrag in Form von z.B Borax, Kupfersulfat, Mangansulfat, Natriummolybdat oder Zinksulfat verabreicht werden können. Da diese Spurenelemente nur in kleinsten Mengen erforderlich sind, um eine ausreichende Versorgung mit diesen Nährstoffen zu gewährleisten und größere Mengen oft schnell zu Schädigungen führen können, müssen diese Stoffe in Abhängigkeit von dem aus eingesetztem Klärschlamm erhaltenen Substrat zugesetzt werden, wobei natürlich dies eine Bodenanalyse voraussetzt und der Differenzbetrag, der dem humusähnlichen Substrat für das Pflanzenwachstum zugesetzt werden muß, mit einem entsprechenden Überschuß beigemengt wird. Somit stellt der erhaltene humusähnliche Substrataustrag einen Kerndünger dar.

Vorteilhafterweise werden dem Substrat vor dem Austrag organische Komplex- bzw. Chelatbildner zugesetzt, um eventuell im Substrat noch enthaltene schädliche Substanzen wie Schwermetalle, aber auch andere das Pflanzenwachstum negativ beeinflussende Fremdsubstanzen zu komplexieren oder zu maskieren bzw. über chelatgebundene Elemente wie Eisen, Mangan, Kupfer, Zink, Cobalt und Calcium das Pflanzenwachstum fördernde bzw. notwendige Elemente dem humusähnlichen Substrat zuzuführen. Als für die Zwecke der Erfindung geeignet haben sich dabei die bekannten Spezial- oder Chelatdünger sowie die übrigen aus der Wasseraufbereitung, der Extraktionstechnik, der Entgiftung oder Abwasserbehandlung bekannte Komplexbildner gezeigt. Als geeignete Komplexbildner seien hier Polyureide, Polyuronsäuren, EDTA, Polyhydroxycarbonsäuren oder dergleichen genannt. Der Effekt dieser Komplexbildner liegt dabei nicht nur in der Bindung und Entfernung von Metallen, sondern zugleich auch in der Unterstützung der Löslichkeit bestimmter, für das Pflanzenwachstum erforderlicher Substanzen. Geeignete Chelatdünger sind die unter der Bezeichnung LibFer^{R} SP, Librel^{R} CMX, Librel^{R} Liquid Ca, Librel^{R} Liquid Co, Librel^{R} Liquid Cu, Librel^{R} Fe-DP, Librel^{R} Fe-Lo, Librel^{R} Liquid Mg, Librel^{R} Liquid Mn, Librel^{R} MX-8, Librel^{R} Liquid Zn, Librebor^{R} 150, Libreleaf^{R} Copper, Libreleaf^{R} Iron oder Libreleaf^{R} Manganese handelsüblich erhältlichen Dünger, die pulverförmig oder als wässrige Lösungen die vorstehend genannten Elemente EDTA- oder DTPA- gebunden bzw. in wässriger Lignosulphonatlösung enthalten.

Wie vorstehend erwähnt, werden in Abhängigkeit von dem eingesetzten Klärschlamm und den speziellen Bedürfnissen dem nach der biologischen Trocknung erhaltenen, humusähnlichen Substrat die vorstehend erwähnten anorganischen und/oder organischen Verbindungen in von 0,01 bis 1 Gew.-%, Spurenelemente in von 0,5 bis 1.000 ppm und/oder Komplexbildner in von 0,005 bis 0,2 Gew.-% zugesetzt. Vorzugsweise enthält das erdähnliche Substrat anorganische und/oder organische Verbindungen in von 0.05 bis 0,75 Gew.-%, Spurenelemente in von 20 bis 350 ppm und/oder Komplexbildner in von 0,01 bis 0,12 Gew.-%. Damit kann in Anpassung an den beabsichtigten Zweck (niederer oder höherer Pflanzenbewuchs mit z.B. Elefantengras oder Bäumen bzw. spätere wirtschafliche Nutzung der Bepflanzung) oder die Art der Wiederaufforstung ein an die Erfordernisse angepaßter Spezialdünger aus humusähnlichem Substrat und Zusätzen hergestellt werden.

Gemäß einer weiteren Ausführungsform der Erfindung können dem aus auf bekannte Art und Weise getrocknetem Klärschlamm erhaltenem, erdähnlichem Substrat Quellsubstanzen zugesetzt werden. Diese Quellsubstanzen dienen dabei als Wasserspeicher und zugleich auch als Abdichtung gegen das Durchdringen von in Regenwasser gelösten schädlichen Substanzen und somit vor dem Eindringen in stillgelegte landwirtschaftliche Nutzflächen, die im wesentlichen frei von jeglichen Kontaminationen sind, jedoch einer gewissen Nährstoffarmut unterliegen.

Alternativ kann das aus Klärschlamm erhaltene, mit Quellsubstanzen versetzte, humusähnliche Substrat selbstverständlich auch in wüstenähnlichen Gebieten eingesetzt werden, wobei hier insbesondere die wasserbindenden Eigenschaften der Quellsubstanzen sich vorteilhaft auswirken.

Als für die Erfindung geeignet haben sich dabei vollständig synthetische Polymere und Copolymere auf der Basis von substituierten und unsubstituierten Acrylsäuren gezeigt, insbesondere Natriumpolyacrylate sowie Natriumpolyacrylat-Polyacrylamid- Copolymere, wie sie unter der Bezeichnung Alcosorb^{R} AB 6 oder Alcosorb^{R} AB 3 S handelsüblich erhältlich sind. Diese Quellsubstanzen haben die Eigenschaft, das 50- bis 750-fache, vorzugsweise das 150- bis 450-fache ihres eigenen Gewichtes an Wasser zu binden. Diese Fähigkeit der Polymere aufzuquellen und Wasser, sowie wässrige Lösungen, die auch schädliche Bestandteile enthalten können, aufzunehmen, machen sie zu nützlichen Additiven für das erfindungsgemäß verwendete humusähnliche Substrat.

Wegen ihrer Eigenschaft in sich gebundenes Wasser für die Pflanze und insbesondere für deren Wurzeln verfügbar zu machen, sind sie daher hervorragend geeignet, als Wasserspeicher dem erfindungsgemäß verwendeten Substrat zugesetzt zu werden, da auf Grund der nur sehr geringen Bindung des Wassers in bzw. an das Polymer das Wasser leicht wiederum an die Wurzeln abgegeben werden kann.

Auch im Hinblick auf Veränderungen in z.B. einem Deponiekörper durch Senkungen oder daß der Deponiekörper zu arbeiten beginnt, hat sich der Einsatz von diesen organischen Quellsubstanzen als erfolgsversprechend gezeigt. Insbesondere auch dann, wenn durch das Arbeiten des Deponiekörpers es zu einem Reißen der Oberfläche kommt, wobei durch einfaches Zuschütten der Reiß- bzw. Bruchstelle mit Quellsubstanzen versetztem, aus der Klärschlammtrocknung erhaltenem humusähnlichem Substrat, die Abdeckung von z.B. einer Deponie leicht repariert werden kann, wobei auch die Rekultivierungseigenschaften bzw. die Wasserbindungseigenschaften nicht verloren gehen.

Weitere Vorteile des erfindungsgemäßen Einsatzes organischer Quellsubstanzen der beschriebenen Art in dem humusähnlichen Substrat sind ihre Gasdurchlässigkeit, da entgegen dem Stand der Technik keinerlei Planen bzw. Beton zur Abdeckung verwendet werden müssen und ein einfacher Gasaaustritt möglich ist, und keine zusätzlichen Kosten für die Installation von Regenwasserableitungs- und Klärsystemen entstehen, da das Wasser im wesentlichen durch diese Quellsubstanzen gebunden wird. Erwähnenswert sei auch noch die schnelle Trocknung, d.h. Bindung des (Regen)Wassers des mit Quellsubstanzen versehenen humusähnlichen Substrats, so daß auch die zusätzliche Bildung von Sickerwasser, wie es üblicherweise in Deponien durch Regenwasserdurchlauf gebildet wird, weitestgehend unterbunden bzw. stark verringert wird.

Das mit den erfindungsgemäß eingesetzten Quellsubstanzen versetzte humusähnliche Substrat ist dabei nicht nur als reversibel Wasser abgebender Speicher, sondern auch als tiefliegender Wasserspeicher geeignet, d.h. als sogenannte Speicher- oder Dichtreserve, die ein weiteres Eindringen von Wasser aufgrund starker Niederschläge in tieferliegende Schichten verhindert.

Der für die erfindungsgemäßen Zwecke jedoch größte Effekt ergibt sich darin, daß die Bindung des Wassers in bzw. an die Quellsubstanz nur reversibel erfolgt und somit als ständig zur Verfügung stehender Wasserspeicher für wasserliebende Bäume der eingangs beschriebenen Art, nämlich Espen, Weiden oder Pappeln, besonders geeignet ist. Darüber hinaus bietet die auf die erfindungsgemäße Verfahrensweise vorgenommene Rekultivierung von stillgelegten landwirtschaftlichen und/oder industriell genutzten Flächen auch den Vorteil, daß der mit dem humusähnlichen Substrat einschließlich der weiteren zugesetzten Zusatzstoffe versehene Deponiekörper begehbar und auch für Reparaturzwecke befahrbar ist, da er eine ausreichende Stabilität, vergleichbar z.B.mit der von mit Beton abgedeckten Deponiekörpern aufweist.

Mittels der erfindungsgemäßen Verfahrensweise ist es daher möglich, stillgelegte landwirtschaftliche und/oder industriell genutzte Flächen mit schnellwachsenden bzw. immer wieder nachwachsenden Rohstoffen (Biomasse) zu bepflanzen, wobei auf Grund des Einsatzes entsprechender Pflanzen- bzw. Baumarten bis zu 10 t Holz pro Jahr und Hektar (ha) gewonnen werden können.

Auf Grund des erfindungsgemäßen Einsatzes von aus getrocknetem Klärschlamm erhaltenem humusähnlichem Substrat ist es überdies möglich, die in nicht geringen Mengen anfallenden unterschiedlichen Klärschlämme für den Landschaftsbau an Straßenböschungen oder Erdwällen einzusetzen, da durch den erfindungsgemäßen Einsatz verschiedener Zusätze wie Quellsubstanzen und für das Pflanzenwachstum notwendige Elemente, das Pflanzenwachstum gefördert und zugleich die Adsorption evtl. sich noch im Klärschlamm befindlicher toxischer oder schädlicher Substanzen gefördert wird. Es sei jedoch dabei darauf hingewiesen, daß, aus Gründen des Umweltschutzes und der Vermeidung von körperlichen Belastungen des Menschen, die erfindungsgemäße Verfahrensweise vorzugsweise nur für Kulturbau und weniger für den Ackerbau geeignet erscheint.

Gemäß einer weiteren Ausführungsform der Erfindung kann das erfindungsgemäße Verfahren auch zu Rekultivierungs- und Wüstenerschließungsmaßnahmen dienen, wobei abgeholzte Flächen, wie sie sich z.B. bei der Pflanzenölgewinnung oder der Brandrodung in den tropischen Gebieten zeigen, wieder mit schnellwachsenden Bäumen bepflanzt werden, die zum einem der Energiegewinnung, zum anderen der Rohstoffbereitstellung dienen. Auf Grund des Anfalles vieler organischer Laststoffe bei der z.B. Pflanzenölgewinnung, des Einsatzes der bekannten Klärtechnik und der bekannten Maßnahmen der biologischen Trocknung von Klärschlämmen mittels Biotrocknern ist es möglich, nach Abholzung des Tropenwaldes und anderer Wälder das erhaltene humusähnliche Substrat aus z.B. von Fett entölten Pflanzenresten und fetthaltiger Bleicherden aus der Fettentfärbung mit Klärschlamm auf nach an sich bekannte Weise zu gewinnen und nach der erfindungsgemäßen Verfahrensweise auf die abgeholzte Fläche aufzubringen. Durch Zugabe z.B. der vorstehend beschriebenen Feuchtigkeitsspeicher (organische Quellsubstanzen auf Basis von Polymeren und Copolymeren von Acrylsäure) sowie der vorstehend genannten Zusatzstoffe (anorganische und/oder organische Nährstoffe für den Pflanzenwuchs) ist es daher möglich, innerhalb weniger Jahre zu einer Wiederaufforstung der abgeholzten Tropenwälder zu gelangen.

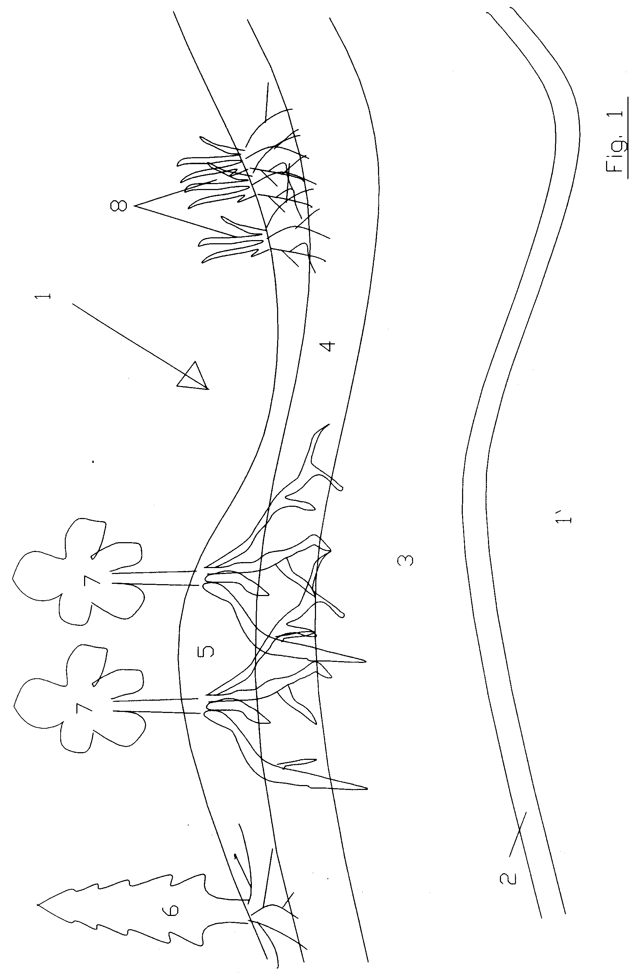

Die Erfindung wird nachfolgend anhand einer Figur näher erläutert, in der Fig. 1 eine schematische Darstellung eines Querschnittes durch eine gemäß der erfindungsgemäßen Verfahrensweise aufgebrachte Abdeckung eines Deponiekörpers zeigt.

Gemäß Fig. 1 ist mit 1 eine stillgelegte Deponie samt Deponiekörper 1' gezeigt, wobei im wesentlichen prinzipiell jede Deponie geeignet ist. Über diesen Deponiekörper wird ein auf bekannte Weise gewonnener Biotrockneraustrag 2 (humusähnliches Substrat) aufgebracht, der stark mittels herkömmlicher Planierungsmaßnahmen gegenüber Wasser weitestgehend undurchlässig, gegenüber Gas jedoch durchlässig verdichtet wird. Darüber befindet sich eine Schicht 3, die ebenfalls aus humusähnlichem Biotrockneraustrag besteht, gegenüber dem Bioaustrag gemäß Schicht 2 jedoch weniger stark verdichtet ist, und, in Abhängigkeit von dem verwendeten Klärschlamm, anorganische und/oder organische Verbindungen, die für das Pflanzenwachstum, insbesondere die dafür erforderlichen Mineralstoffe enthält. Gleichzeitig dienen die in diesem Biotrockneraustrag sich befindenden Verdickungsmittel bzw. Absorptionsmittel einem zusätzlichen Wasserrückhalt für den darunter sich befindlichen Deponiekörper, so daß die sich zusätzlich bildende Wassermenge aufgrund von Regenfällen zumindest auf einem konstanten Niveau gehalten werden kann.

An diese Schicht 3 schließt sich eine Schicht 4 an, die die Sperrschicht für über Regenfälle eindringendes Wasser darstellt und Quellsubstanzen der vorstehend beschriebenen Art im Mengen bis zu 0,1 Gew.-% bezogen auf das Substrat enthält. Sollte daher aufgrund von Rissen oder z.B. durch extrem starken Niederschlag Schicht 4 durchdrungen werden, ist Schicht 3 zusätzliche Speicherreserve und Schicht 2 Dichtungsreserve, so daß ein Eintritt von Wasser in den Deponiekörper weitestgehend verhindert wird.

Über der Schicht 4 ist eine weitere Schicht 5 aus Biotrockneraustrag aufgebracht, die die vorstehend genannten Komplexbildner sowie anorganische und organische Salze enthält. Diese Schicht ist im wesentlichen von einer Stärke von ca. 1,0 m und bildet die Nährstoff- und Wasserversorgungsgrundlage für die darauf angepflanzten, schnellwachsenden Bäume 7 wie Espen, Weiden oder Pappeln sowie Gräser 8 und andere geeignete Bäume und Pflanzen, z.B. Fichten 6. Prinzipiell sind jedoch auch alle anderen Laub- und Nadelbäume geeignet.

Erfindungsgemäß ist die Schicht 4 aus einer humusähnlichen Substratschicht mit Quellsubstanzen aufgebaut. Es hat sich dabei als vorteilhaft erwiesen, die erfindungsgemäß eingesetzten Quellsubstanzen in das Substrat einer Dicke von ca. 0,1 bis 0,2 m in Mengen von 0,01 bis 1 Gew.-%, vorzugsweise von 0,05 bis 0,75 Gew.-%, insbesondere von 0,1 bis 0,3 Gew.-% einzubringen. Wegen ihrer hervorragenden, reversiblen Wasserbindungseigenschaft bieten diese Quellsubstanzen in dieser Schicht die erforderliche Grundlage für die Wasserversorgung der darauf aufgebrachten, schnell blühenden und wachsenden Pflanzen, die neben der landschaftlichen Verschönerung ehemaliger Deponien zugleich den Vorteil hat, Biomasse zur Energiegewinnung zu erzeugen, so daß der Kreislauf aus Umwandlung von Biomasse in Klärschlamm und Klärschlamm in Substrat für erneute Biomasse geschlossen ist, zugleich aber auch die erforderliche Grundlage für die Abdichtung gegenüber zu starken Wasserdurchlauf aufgrund ihrer hohen Wasserbindungskapazität, die Werte bis 100 % erreichen kann, d.h. 1000 l Wasser können pro m3 aufgenommen werden.

Zur Vermeidung eines zu starken, die Eigenschaften der Quellsustanzen in der Schicht 4 nachteilig beeinflussenden biologischen Abbaus oder einer zu starken Austrocknung kann gemäß der Erfindung in den Poren der Quellsubstanzen, z.Bein Bakterizid, ein Fungizid, ein Algizid oder eine ähnlich wirkende Substanz eingebracht oder chemisch an das Grundgerüst der Quellsubstanz gekoppelt werden.

Die Schichten 3 bis 5 sind dabei die Schichten, die der Durchwurzelung durch die Pflanzen unterliegen, wobei diese Schichten und darüberhinaus auch noch die Schicht 2 aufgrund ihrer biologische Restaktivität als Bio- oder Kompostfilter dienen können. Aufgrund dieser diesen Schichten innewohnenden Filtereigenschaften ist ein Entweichen übelriechender und/oder toxischer Substanzen durch Abbau dieser Substanzen bzw. durch Dekontamination unmöglich.

Ein spezieller Anwendungsfall des erfindungsgemäßen Verfahrens sind die Anwendung bei Altdeponien, die wenig Gas abgeben, und bei jüngeren Deponien mit relativ geringem Gasanfall wie reine Erddeponien oder Gemischterddeponien

Aufgrund des Einsatzes der vorstehend beschriebenen Zusatzstoffe ist das erhaltene humusähnliche Substrat auch hervorragend als Blumentopferde aber auch als Bodenverbesserungsmittel in der Zucht von Blumen geeignet, wobei in Anpassung an den für die Pflanzen erforderlichen pH-Wert, der eingesetzten Spurenelemente, Quellsubstanzen und Chelatdünger spezifische Erden erhalten werden, bei denen z.B. aufgrund der Menge der eingesetzten Quellsubstanzen das Gießen der Pflanzen zeitunabhängig ist, d.h. ein Gießen ist nur einmal in der Woche oder einmal pro Monat oder in einem beliebig einstellbaren Zeitraum notwendig bzw. erforderlich.

Mit dem erfindungsgemäßen Verfahren bieten sich daher vielerlei Möglichkeiten, den anfallenden Klärschlamm mittels bekannter Klärschlammtechnologie in humusähnliches Substrat umzuwandeln und das erhaltene humusähnliche Substrat nach Zusatz der für das Pflanzenwachstum erforderlichen Nährstoffe sowie wasserabgebenden Stoffe für wirtschaftlich nicht mehr oder nicht zu nutzende Flächen zu verwenden und somit auch durch die Gewinnung von Biomasse bzw. Holz dem z. B. weltklimabeeinflussenden Abbau der tropischen Regenwälder wegen der Holzgewinnung entgegenzutreten.

## Patentansprüche

1. Verfahren zur Rekultivierung stillgelegter landwirtschaftlich und/oder industriell genutzter Flächen durch Klärschlamm mit den Verfahrensstufen
a) mechanisches Entwässern des Klärschlammes,
b) Zusatz von aus Vorrotte und/oder Nachrotte erhaltenem, mit Additiven versetztem Rückgut,
c) aerobe mikrobielle Vorrotte,
d) aerobe Nachrotte unter Erhalt eines humusähnlichen Substrates,
**dadurch gekennzeichnet**, daß
das aus den Schritten a) bis d) erhaltene humusähnliche Substrat auf Böschungen und/oder Erdwällen, auf Deponien als Abdeckung oder auf abgeholzte Flächen zur Wiederaufforstung ausgetragen wird.

2. Verfahren nach Anspruch 1,
**dadurch gekennzeichnet**, daß
dem Substrat vor dem Austrag auf die zu rekultivierende Fläche anorganische und/oder organische Verbindungen zugesetzt werden.

3. Verfahren nach Anspruch 1 oder 2,
**dadurch gekennzeichnet**, daß
dem Substrat Alkali- und/oder Erdalkali-Metallsalze sowie Spurenelemente zugesetzt werden.

4. Verfahren nach einem der Ansprüche 1 bis 3,
**dadurch gekennzeichnet**, daß
dem Substrat organische Komplexbildner zugesetzt werden.

5. Verfahren nach einem der Ansprüche 1 bis 4,
**dadurch gekennzeichnet**, daß,
in Abhängigkeit von dem eingesetzten Klärschlamm und den speziellen Bedürfnissen dem erhaltenen Substrat anorganische und/oder organische Verbindungen in von 0,01 bis 1,0 Gew.-%, Spurenelemente in von 0,5 bis 1000 ppm und/oder Komplexbildner in von 0,005 bis 0,2 Gew.-%, bezogen auf das Gesamtgewicht des humusähnlichen Substrats, zugesetzt werden.

6. Verwendung eines nach einem der Ansprüche 1 bis 5 eingesetzten humusähnlichen Substrates als Blumenerde.
